# FASCICULE DE BREVET EUROPEEN

(11) **EP 1 490 304 B1**
(45) Date de publication et mention de la délivrance du brevet: **20.02.2008**
(21) Numéro de dépôt: 03732629.5
(22) Date de dépôt: 26.03.2003
(51) Int. Cl.: C02F 3/30, C02F 3/12

(54) **INSTALLATION CIRCULAIRE POUR LE TRAITEMENT BIOLOGIQUE DES EAUX USEES.**
KREISFÖRMIGE VORRICHTUNG ZUR BIOLOGISCHEN BEHANDLUNG VON ABWASSER
CIRCULAR INSTALLATION FOR THE BIOLOGICAL TREATMENT OF WASTEWATER.

(30) Priorité: 29.03.2002 FR 0204050
(43) Date de publication de la demande: 29.12.2004
(73) Titulaire: OTV S.A., 94417 Saint-Maurice Cédex (FR)
(72) Inventeur: TABAN, Jacques, F-75018 Paris (FR); PEARSON, Rob, Collaroy Beach, NSW 2097 (AU)
(74) Mandataire: Vidon, Patrice
(86) Numéro de dépôt international: PCT/FR2003/000963
(87) Numéro de publication internationale: WO 2003/082752

(56) Documents cités:
- EP-A- 0 458 760
- EP-A- 0 474 296
- EP-A- 0 526 853
- EP-A- 0 749 942
- EP-A- 1 114 797
- FR-A- 2 748 742
- IE-B- 71 631
- US-A- 3 809 242

## Description

L'invention concerne le domaine du traitement biologique des eaux en vue de leur épuration.

Plus précisément, l'invention concerne le traitement biologique des eaux par boues activées.

Les procédés de traitement des eaux usées industrielles et/ou urbaines par boues activées mettent classiquement en oeuvre différentes phases de traitement qui nécessitent classiquement l'utilisation de plusieurs bassins de traitement.

Un type particulier de bassin utilisé dans le cadre du traitement des eaux usées est constitué par les bassins à chenaux.

De tels bassins sont notamment décrits dans le document de l'art antérieur « design of municipal wastewater treatment plants », WEF manual of practice n°8, 4ème Edition, pages 11-28 à 11-36 (volume 2-1998)

De tels bassins à chenaux présentent une forme allongée, une paroi médiane longitudinale et une ou deux cloisons correctrices permettant de délimiter deux ou trois chenaux, et sont par ailleurs munis de moyens permettant de faire circuler l'eau y transitant selon un circuit évitant les court-circuits et favorisant un contact optimisé entre l'eau à épurer et la biomasse présente dans le bassin, (voir EP.0 526 853 A1 ou EP-0 474 296 A1).

C'est plus précisément aux installations de traitement des eaux usées intégrant ce type de bassin que se rapporte la présente invention.

Comme déjà indiqué ci-dessus, de nombreuses installations des eaux usées nécessitent le recours à plusieurs bassins.

L'utilisation de plusieurs bassins peut être requise pour mettre en oeuvre plusieurs étapes d'un procédé de traitement ou peut être rendue nécessaire par la quantité et/ou le débit des eaux à traiter. Selon les cas, on prévoira une implantation en série ou en parallèle de ceux-ci.

Pour la réalisation de telles installations incluant plusieurs bassins, il est connu de réaliser le génie civil de chacun de ceux-ci de façon indépendante et d'établir des liaisons hydrauliques par canalisations entre les bassins ainsi réalisés.

Une telle configuration présente plusieurs inconvénients.

En premier lieu, l'implantation séparée des bassins implique une emprise au sol importante. Or, dans de nombreux cas, il est souhaitable de réaliser des installations les plus compactes possibles, par exemple pour des questions de coût de terrain.

En second lieu, l'utilisation de canalisations pouvant être de grandes dimensions, pour joindre hydrauliquement les bassins entre eux, augmente considérablement les coûts de réalisation des installations ainsi que leur coût de maintenance. En pratique, la réalisation de ces liaisons hydrauliques peut représenter jusqu' à 25% du coût total d'une installation.

L'utilisation de telles canalisations augmente également la probabilité de risque de dysfonctionnement de l'ensemble.

Il est également connu de l'art antérieur d'associer plusieurs bassins d'une même installation de traitement des eaux usées dans un seul et même génie civil de forme essentiellement carrée ou rectangulaire.

Dans un tel cas, le passage de l'eau d'un bassin à l'autre peut se faire par déversoir(s) ou par goulotte(s), ce qui permet de supprimer les canalisations susmentionnées et de réaliser des installations plus compactes.

Toutefois, pour la réalisation de bassins susceptibles d'accueillir des hauteurs d'eau supérieures à environ 5 mètres, les coûts de réalisation de génies civils de forme carrée ou rectangulaire sont élevés, notamment lorsque ces installations incluent des bassins à chenaux.

Une autre installation de forme essentiellement circulaire est connue de US-A-3 809 242.

Un objectif de la présente invention est de proposer un nouveau type d'installation ne présentant pas les inconvénients sus-mentionnés de l'état de la technique.

Ainsi, un objectif de la présente invention est de présenter un type d'installation dont l'emprise au sol est moindre, à capacité de traitement identique, que les installations connues de l'art antérieur.

Egalement un objectif de la présente invention est de présenter un nouveau type d'installation dont la réalisation du génie civil implique des coûts moindres que ceux de l'état de la technique.

Ces différents objectifs, ainsi que d'autres qui apparaîtront par la suite, sont atteints grâce à l'invention qui concerne une installation pour le traitement biologique d'eau comme divulgué dans la revendication 1.

Le principe de l'invention consiste donc à associer dans un génie civil de configuration essentiellement circulaire à la fois au moins deux bassins à chenaux et un bassin amont et à prévoir ledit bassin amont au centre de l'installation, de façon définie dans la partie caractérisante de ladite revendication 1.

On notera que dans le cadre de la présente description, on entend, conformément à la pratique courante de l'homme de l'art, le termes « amont » et « aval » en référence au chemin parcouru par l'eau à traiter. Selon une telle définition, l'eau à traiter passe donc, au moins en partie, d'abord dans le bassin amont avant d'entrer dans les bassins à chenaux.

Une telle configuration circulaire permet de réaliser le génie civil intégrant ces différents bassins à un coût moindre que celui qui serait suscité par le génie civil de bassins de mêmes volumes réalisés selon l'état de la technique.

En effet, selon la configuration circulaire proposée par l'invention, le génie civil est plus facile à réaliser. Les structures en cercle ou en arc de cercle sont en effet connues en architecture pour présenter une résistance accrue, à épaisseur de paroi égale, par rapport à des structures rectangulaires ou carrées.

Selon une première variante de l'invention, une telle installation présente deux bassins à chenaux et un bassin amont central essentiellement circulaire.

Une telle configuration circulaire du bassin amont central permet d'optimiser encore le coût de construction de l'installation puisque la paroi extérieure de ce bassin central peut constituer une paroi intérieure des chenaux.

Selon une seconde variante de l'invention, une telle installation présente deux bassins à chenaux et deux bassins amont centraux essentiellement hémi-circulaires.

L'utilisation de deux bassins amont centraux en forme de demi-cercles présente l'avantage de permettre l'utilisation de chacun de ces bassins amont en parallèle comme explicité ci-après.

La présente invention n'est explicitement pas limitée au cas où l'installation inclut deux bassins à chenaux. Ainsi on pourra prévoir plus de deux bassins à chenaux et notamment trois bassins à chenaux ou, selon une variante intéressante, quatre bassins à chenaux qui présenteront tous une forme incurvée et s'inscriront dans un cercle.

Ainsi, selon une troisième variante de l'invention, une telle installation présente quatre bassins à chenaux et un bassin amont central essentiellement circulaire.

Selon une quatrième variante de l'invention, une telle installation présente quatre bassins à chenaux et deux bassins amont centraux essentiellement hémi-circulaires.

En référence aux première et deuxième variantes citées ci-dessus, l'installation comprend des moyens permettant de faire fonctionner lesdits deux bassins à chenaux en parallèle.

Dans le cas où deux bassins amont centraux de forme hémi-circulaire sont prévus, on pourra utiliser ceux-ci en parallèle.

En référence aux troisième et quatrième variantes citées ci-dessus, l'installation comprend des moyens permettant de faire fonctionner lesdits quatre bassins à chenaux en parallèle.

Selon un aspect préférentiel de l'invention, le ou chaque bassin amont central présente des moyens permettant d'y définir deux zones.

Ces deux zones pourront être utilisées, comme il sera explicité ci-après plus en détail pour délimiter des phases du procédé de traitement de l'eau dans l'installation.

On pourra envisager différents moyens de réalisation des moyens de délimitation prévus préférentiellement au sein du ou de chaque bassin amont central permettant de définir les zones en question.

Selon une variante, lesdits moyens de délimitation définissent au sein du ou de chaque bassin amont central une zone périphérique en arc de cercle.

Selon une autre variante ces moyens définissent au sein du ou de chaque bassin amont central une zone centrale circulaire au centre de l'installation.

Préférentiellement, lesdits moyens d'amenée d'eau et lesdits moyens d'amenée des boues recyclées du clarificateur aval sont prévus au niveau dudit bassin amont central.

Selon une variante, des moyens d'amenée d'eau annexes permettant d'amener une partie seulement de l'eau à traiter directement dans lesdits bassins à chenaux sont prévus dans l'installation. Dans un tel cas, ladite partie de l'eau amenée dans lesdits bassins à chenaux par lesdits moyens d'amenée d'eau annexes représente préférentiellement O à 75 % environ du volume d'eau total à traiter, 100% à 25% de ce volume total restant acheminé par lesdits moyens d'amenée d'eau.

Ces moyens d'amenée d'eau annexes pourront être mise en oeuvre dans certains cas selon les exigences d'un procédé de traitement d'eau donné.

Selon une variante intéressante de l'invention, l'installation pourra inclure des zones de transit de l'eau entre les bassins à chenaux. De telles zones pourront être avantageusement utilisées pour acheminer l'eau d'un bassin à l'autre, pour évacuer l'eau traiter ou encore en guise de zones de sélection.

Selon une variante préférentielle, ces zones pourront montrer une section transversale essentiellement triangulaire et être situées chacune entre deux bassins à chenaux.

On notera également qu'une ou plusieurs zones de décantation lamellaire pourront être intégrées dans lesdits chenaux afin soit d'augmenter la concentration de la liqueur mixte dans lesdits chenaux et optimiser ainsi le dimensionnement de ceux-ci soit de diminuer la concentration de la liqueur mixte envoyée en clarification et permettre ainsi de réduire le dimensionnement du clarificateur aval.

L'installation selon la présente invention peut être utilisée pour la mise en oeuvre de différents procédés de traitement biologiques d'eau connus de l'art antérieur, tel que les procédés BIODENITRO ou BIODENIPHO décrits notamment dans le brevet DK131297 ou le procédé AZENIT et ses variantes décrits dans les brevets FR2725193 et FR2760232.

L'invention sera mieux comprise grâce à la description qui va suivre d'un mode non limitatif de réalisation de l'invention en référence aux dessins sur lesquels :
- la figure 1 représente une vue de dessus d'une installation circulaire de traitement biologique des eaux usées selon la présente invention ;
- la figure 2 représente une vue en coupe AA' longitudinale de l'installation représentée à la figure 1 ;
- la figure 3 représente une vue en coupe longitudinal OB (O étant le centre de l'installation de cette même installation).

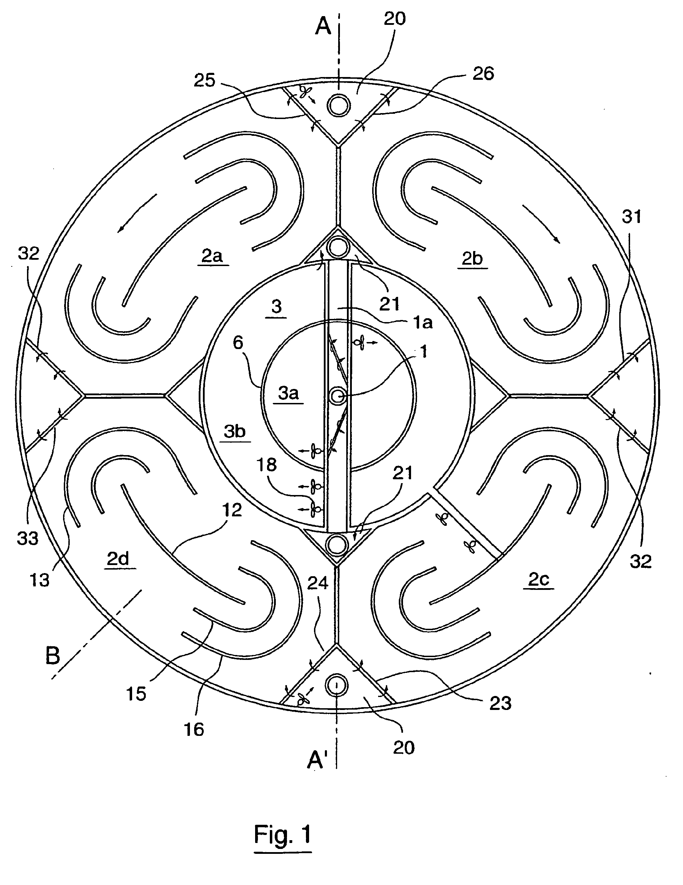

En référence aux figures 1 à 3, l'installation comprend des moyens d'amenée 1 d'eau à traiter abouchant au centre de l'installation. L'eau à traiter arrive au niveau de ces moyens d'amenée 1 par une canalisation 11 prévue sous l'installation.

Conformément à la présente invention, l'installation comprend un bassin amont central 3 qui, dans le cadre du présent mode de réalisation, présente une forme circulaire et est pourvu de moyens de délimitation constitués par une paroi 6 permettant de définir au sein de ce bassin amont central 3 une première zone 3a et une deuxième zone 3b. Ce bassin 3 accueille également des moyens d'amenée des boues 40 recyclées par une canalisation 40a d'un clarificateur aval (non représenté).

Toujours, conformément à la présente invention, l'installation comprend des bassins à chenaux, en l'occurrence quatre bassins 2a, 2b, 2c et 2d. Chaque bassin à chenaux présente une paroi centrale 12 et quatre cloisons correctrices 13, 14, 15, 16 permettant de réaliser les chenaux.

Le bassin amont central 3 et les bassins à chenaux 2a, 2b, 2c, 2d sont inscrits dans un génie civil circulaire.

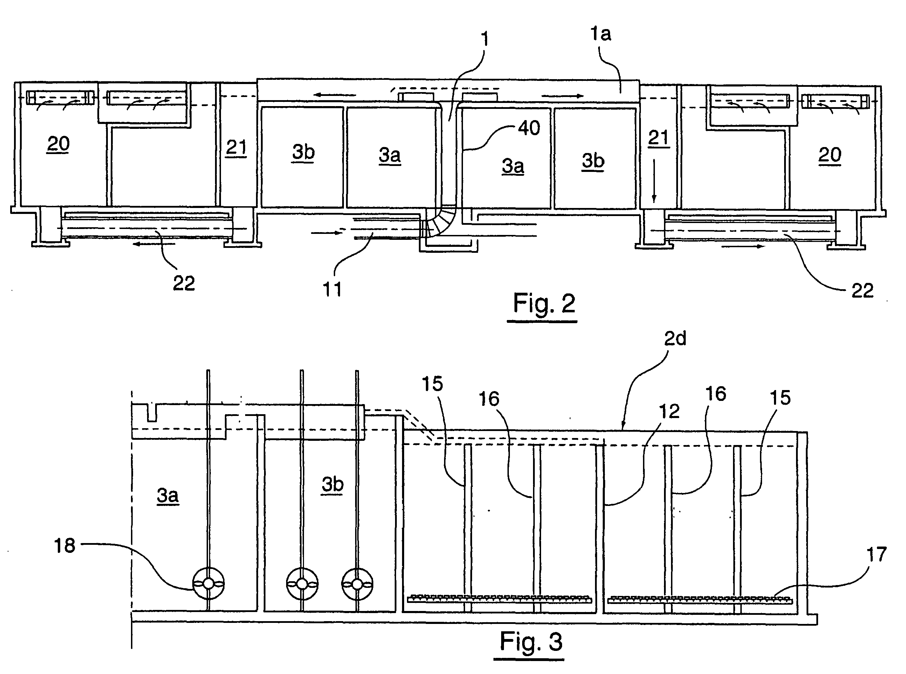

Comme on peut le voir sur la figure 3, ces bassins à chenaux sont pourvus de moyens d'aération 17.

Le bassin central amont 3 est quant à lui pourvu de moyens de mélange 18 permettant de faire circuler l'eau à traiter et les boues qui y transitent.

Comme on peut le voir clairement sur la figure 1, les bassins à chenaux présentent une forme incurvée et sont disposés en couronne autour du bassin amont central 3.

On notera que des zones 20, 21 et 5 de sections transversales essentiellement triangulaires sont prévus entre les bassins à chenaux.

Les zones 21 communiquent par déversoir avec le bassin central amont 3 ainsi qu'avec les zones 20 auxquelles elles sont reliées par des canalisations 22 situées sous l'installation.

Ces zones 20 communiquent quant à elles par des déversoirs 23, 24, 25 et 26 avec les bassins à chenaux.

Les bassins à chenaux communiquent par des déversoirs 30, 31, 32 et 33 avec les zones 5 qui constituent une partie des moyens d'évacuation de la liqueur mixte.

On notera également que les moyens d'amenée d'eau 1 coopèrent avec des moyens d'amenée d'eau annexes la constitués par une goulotte qui permet d'amener une partie de l'eau vers les bassins à chenaux sans que cette partie transite dans le bassin amont central 3.

Comme déjà précisé, l'installation selon la présente invention pourra être mise en oeuvre selon des configurations d'utilisation variables.

Ainsi, selon le présent mode de réalisation, on pourra prévoir de placer la zone 3a du bassin amont central 3 en condition d'anoxie et la zone 3b du bassin amont central 3 en condition d'anaérobiose. Parallèlement, les moyens d'aération 17 des bassins à chenaux pourront être activés de façon séquencée de façon à ménager dans ceux-ci des phases d'aérobiose et des phases d'anoxie.

La zone centrale 3a du bassin amont central 3 est une zone anoxique permettant d'éliminer les nitrates circulés par la boue en provenance du clarificateur aval et éventuellement des nitrates amenés dans l'eau à traiter. Cette zone 3a sert de protection à la zone anaérobie 3b qui doit impérativement rester en condition d'anaérobiose.

La présence de conditions d'anaérobiose dans la zone centrale 3b du bassin amont central 3 permettra d'éliminer la pollution phosphorée contenue dans l'effluent à traiter mais aussi d'éliminer les bactéries filamenteuses nocives au processus biologique de dépollution et de permettre ainsi de sélectionner la biomasse souhaitée à cette fin.

L'utilisation d'une aération séquencée dans les chenaux permettra quant à elle de dégrader la pollution carbonée et azotée de l'eau à traiter.

Dans le cadre d'une telle configuration, le mode de fonctionnement de l'installation représenté aux figures 1 à 3 est le suivant.

L'effluent à traiter arrive par la canalisation 11 jusqu'aux moyens d'amenée 1 de l'eau dans l'installation prévue en position centrale de celle-ci. Cette eau est alors distribuée à 70% dans le bassin amont central 3 pour transiter en premier dans la zone 3a de celle-ci placée en anoxie, puis dans la zone 3b de celle-ci placée en condition d'anaérobiose.

Les boues recyclées en provenance du clarificateur aval sont introduites en totalité par la canalisation 40a dans la zone 3a.

La circulation et le mélange de l'eau et des boues dans ces bassins sont améliorés grâce à la présence des mélangeurs 18. Lors du transit de l'effluent dans la zone 3b placée en condition d'anaérobiose, le processus de dégradation du phosphore est amorcé et les bactéries filamenteuses sont éliminées.

Après avoir transité dans le bassin amont central 3, la liqueur mixte passe par-dessus les déversoirs reliant ce bassin amont central 3 aux zones 21. L'eau transite ensuite dans les canalisations 22 pour arriver dans les zones 20 d'où elle est distribuée en passant par des déversoirs 23, 24, 25, 26 respectivement dans les bassins à chenaux 2c, 2d, 2a, 2b.

On comprendra donc que selon une telle configuration, les bassins à chenaux 2a, 2b, 2c, 2d fonctionnent en parallèle.

Grâce au séquençage de l'aération, l'effluent est débarrassé de l'essentiel de sa pollution azotée et carbonée lors de son passage dans ces bassins.

L'eau ainsi épurée et la boue épuratrice formant la liqueur mixte passent ensuite par-dessus les déversoirs 30, 31, 32 et 33 pour être évacuées par les moyens d'évacuation 5 de la liqueur mixte vers le clarificateur aval (non représenté) qui permet de séparer cette liqueur mixte en une eau épurée et des boues qui sont recyclées par la canalisation 40a vers la zone 3a du bassin amont 3.

On notera que 30% de l'eau arrivant par les moyens d'évacuation 1 transite par la goulotte la arrive dans les zones 21 et est distribuée dans les chenaux 2a, 2b, 2c,2d sans passer par le bassin amont 3. Ceci permet d'optimiser le fonctionnement de la zone d'anaérobiose.

Le mode de réalisation de l'installation ici décrit ainsi que l'exemple de configuration selon laquelle elle est utilisée ne sont absolument pas limitatifs.

Comme déjà indiqué, on pourra notamment prévoir non pas un seul bassin central amont mais deux bassins centraux amont présentant une forme hemi-circulaire. On pourra également prévoir moins ou plus de quatre bassins à chenaux, par exemple deux.

Selon le procédé connu de l'homme de l'art BIODENIPHO, l'effluent (liqueur mixte) transitera dans deux chenaux placés en série et alternativement en conditions anoxique et aérobie.

## Revendications

1. Installation pour le traitement biologique d'eau présentant une configuration essentiellement circulaire et comprenant des moyens d'amenée (1) d'eau à traiter, des moyens d'amenée (40) de boues provenant d'au moins un clarificateur aval, lesdites boues amenant la biomasse épuratrice, au moins un bassin (3) amont en position centrale pourvu de moyens d'aération, et des moyens d'évacuation (5) vers ledit clarificateur aval de la liqueur mixte comprenant l'eau traitée et la biomasse épuratrice
**caractérisée en ce qu'**elle présente au moins deux bassins à chenaux (2a, 2b, 2c, 2d) de forme incurvée prévus en position périphérique autour dudit bassin amont central, chaque bassin à chenaux présentant une paroi centrale (12) et des parois correctrices (15,16),
et **en ce qu'**elle inclut des moyens permettant de faire fonctionner lesdits au moins deux bassins à chenaux en parallèle.

2. Installation selon la revendication 1 **caractérisée en ce qu'**elle présente deux bassins à chenaux et un bassin amont central essentiellement circulaire.

3. Installation selon la revendication 1 **caractérisée en ce qu'**elle présente deux bassins à chenaux et deux bassins amont centraux essentiellement hémi-circulaires.

4. Installation selon la revendication 1 **caractérisée en ce qu'**elle présente quatre bassins (2a, 2b, 2c, 2d) à chenaux et un bassin amont central (3) essentiellement circulaire.

5. Installation selon la revendication 1 **caractérisée en ce qu'**elle présente quatre bassins à chenaux et deux bassins amont centraux essentiellement hémi-circulaires.

6. Installation selon l'une quelconque des revendications 1 à 5 **caractérisée en ce que** le ou chaque bassin amont central présente des moyens (6) permettant d'y définir deux zones.

7. Installation selon la revendication 6 **caractérisée en ce que** lesdits moyens de délimitation définissent au sein du ou de chaque bassin amont central une zone périphérique en arc de cercle.

8. Installation selon la revendication 6 **caractérisée en ce que** lesdits moyens (6) de délimitation définissent au sein du ou de chaque bassin amont central une zone centrale circulaire (3a) au centre de l'installation.

9. Installation selon l'une quelconque des revendications 1 à 8 **caractérisée en ce que** lesdits moyens d'amenée d'eau (1) et lesdits moyens d'amenée des boues recyclées (40) sont prévus au niveau dudit bassin amont central.

10. Installation selon l'une quelconque des revendications 1 à 9 **caractérisée en ce qu'**elle présente des moyens d'amenée d'eau annexes (1a) permettant d'amener une partie seulement de l'eau à traiter directement dans lesdits bassins à chenaux.

11. Installation selon la revendication 10 **caractérisée en ce que** ladite partie de l'eau amenée dans lesdits bassins à chenaux par lesdits moyens d'amenée d'eau annexes (1a) représente O à 75 % environ du volume d'eau total à traiter, 100% à 25% de ce volume total restant acheminé par lesdits moyens d'amenée d' eau (1).

12. Installation selon l'une quelconque des revendications 1 à 11 **caractérisée en ce qu'**elle inclut des zones de transit de l'eau (20,21,5) entre les bassins à chenaux.

13. Installation selon la revendication 12 **caractérisée en ce que** lesdites zones de transit (20,21,5) présentent des sections transversales essentiellement triangulaires et sont situées chacune entre deux bassins à chenaux.

14. Installation selon l'une quelconque des revendications 1 à 13 **caractérisée en ce qu'**une ou plusieurs zones de décantation lamellaire pourront être intégrées dans lesdits chenaux

## Claims

1. Installation for the biological treatment of water having an essentially circular configuration and comprising means (1) of conveying water to be treated, means (40) of conveying sludge from at least one downstream clarifier, the said sludge bringing in the purifying biomass, at least one upstream pond (3), in the central position provided with aeration means, and evacuation means (5) to the said downstream clarifier of the mixed liquor including treated water and the purifying biomass,
**characterised in that** it has at least two channel ponds (2a, 2b, 2c, 2d) which are curved in shape and located in a peripheral position around the said central upstream pond, each channel pond having a central wall (12) and correcting walls (15, 16),
and **in that** it includes means of making said at least two channel ponds operate in parallel.

2. Installation according to claim 1, **characterised in that** it has two channel ponds and a central essentially circular upstream pond.

3. Installation according to claim 1, **characterised in that** it has two channel ponds and two central essentially semi-circular upstream ponds.

4. Installation according to claim 1, **characterised in that** it has four channel ponds (2a, 2b, 2c, 2d), and a central essentially circular upstream pond (3).

5. Installation according to claim 1, **characterised in that** it has four channel ponds and two central essentially semi-circular upstream ponds.

6. Installation according to any one of claims 1 to 5, **characterised in that** the central upstream pond or each central upstream pond includes means (6) of defining two zones.

7. Installation according to claim 6, **characterised in that** the said delimitation means define a peripheral zone around the arc of a circle in the central upstream pond or in each central upstream pond.

8. Installation according to claim 6, **characterised in that** the said delimitation means (6) define a central circular zone (3a) at the centre of the installation, in the central upstream pond or in each central upstream pond.

9. Installation according to any one of claims 1 to 8, **characterised in that** the said water conveyance means (1) and the said recycled sludge conveyance means (40) are provided in the said central upstream pond.

10. Installation according to any one of claims 1 to 9, **characterised in that** it has auxiliary water conveyance means (1a) to bring only part of the water to be treated directly into the said channel ponds.

11. Installation according to claim 10, **characterized in that** the said proportion of the water brought into the said channel ponds through the said auxiliary water conveyance means (1a) is preferably equal to 0 to approximately 75% of the total water volume to be treated, the remaining 100% to 25% of the total volume being conveyed by the said water conveyance means (1).

12. Installation according to any one of claims 1 to 11, **characterised in that** it includes water transit zones (20, 21, 5) between channel ponds.

13. Installation according to claim 12, **characterized in that** the said transit zones (20, 21, 5) have essentially triangular cross-sections, and each is located between two channel ponds.

14. Installation according to any one of claims 1 to 13, **characterised in that** one or several lamellar settlement zones could be included in the said channels.

## Patentansprüche

1. Anlage zur biologischen Abwasserbehandlung, die eine im Wesentlichen kreisförmige Konfiguration aufweist sowie Zuleitungsmittel (1) für das zu behandelnde Abwasser, Zuleitungsmittel (40) für die aus mindestens einer stromabwärts liegende Klärvorrichtung kommenden Schlämme, wobei die besagten Schlämme die klärende Biomasse zuleiten, mindestens ein in zentraler Position stromaufwärts liegendes Becken (3), welches über Belüftungsmittel verfügt und Mittel (5) zum Ableiten der aus dem behandelten Abwasser und der klärenden Biomasse zusammengesetzten gemischten Flüssigkeit zur besagten stromabwärts liegenden Klärvorrichtung,
**dadurch gekennzeichnet, dass** die Anlage mindestens zwei Kanalbecken umfasst, welche Kanäle mit gebogener Form (2a, 2b, 2c, 2d) aufweisen, die am Umfang des besagten in zentraler Position stromaufwärts liegenden Beckens verteilt sind, wobei jedes dieser Kanalbecken eine mittlere Wand (12) und Korrekturwände (15, 16) aufweist und **dadurch**,
dass die Anlage über Mittel verfügt, die es ermöglichen, die besagten mindestens zwei Kanalbecken parallel zu betreiben.

2. Anlage nach Anspruch 1, **dadurch gekennzeichnet, dass** sie zwei Kanalbecken und ein in zentraler Position stromaufwärts gelegenes, im Wesentlichen kreisförmiges, Becken aufweist.

3. Anlage nach Anspruch 1, **dadurch gekennzeichnet, dass** sie zwei Kanalbecken und zwei in zentraler Position stromaufwärts gelegene, im Wesentlichen halbkreisförmige, Becken aufweist.

4. Anlage nach Anspruch 1, **dadurch gekennzeichnet, dass** sie vier Kanalbecken (2a, 2b, 2c, 2d) und ein in zentraler Position stromaufwärts gelegenes, im Wesentlichen kreisförmiges, Becken (3) aufweist.

5. Anlage nach Anspruch 1, **dadurch gekennzeichnet, dass** sie vier Kanalbecken und zwei in zentraler Position stromaufwärts gelegene, im Wesentlichen halbkreisförmige, Becken aufweist.

6. Anlage nach einem der Ansprüche 1 bis 5, **dadurch gekennzeichnet, dass** das bzw. jedes der stromaufwärts gelegenen Becken Mittel (6) aufweist bzw. aufweisen, mit deren Hilfe sich dort zwei Bereiche abgrenzen lassen.

7. Anlage nach Anspruch 6, **dadurch gekennzeichnet, dass** die besagten Begrenzungsmittel innerhalb des in zentraler Position stromaufwärts gelegenen Beckens bzw. innerhalb eines jeden der in zentraler Position stromaufwärts gelegenen Becken einen kreisbogenförmigen peripheren Bereich definieren.

8. Anlage nach Anspruch 6, **dadurch gekennzeichnet, dass** die besagten Begrenzungsmittel (6) innerhalb des in zentraler Position stromaufwärts gelegenen Beckens bzw. innerhalb eines jeden der in zentraler Position stromaufwärts gelegenen Becken einen kreisbogenförmigen zentralen Bereich (3a) in der Mitte der Anlage definieren.

9. Anlage nach einem der Ansprüche 1 bis 8, **dadurch gekennzeichnet, dass** die besagten Wasserzuleitungsmittel (1) sowie die besagten Zuleitungsmittel für die rezyklierten Schlämme (40) auf der Höhe des zentral stromaufwärts gelegenen Beckens angebracht sind.

10. Anlage nach einem der Ansprüche 1 bis 9, **dadurch gekennzeichnet, dass** sie nebensächliche Wasserzuleitungsmittel (1a) aufweist, welche das Einleiten nur eines Teiles der zu behandelnden Abwässer in die besagten Kanalbecken erlauben.

11. Anlage nach Anspruch 10, **dadurch gekennzeichnet, dass** der besagte Anteil des von den besagten nebensächlichen Wasserzuleitungsmitteln (1a) in die besagten Kanalbecken eingeleiteten Wassers in etwa 0 bis 75 % des gesamten zu behandelnden Abwasservolumens beträgt, wobei 100 % bis 25 % dieses Gesamtvolumens durch die besagten Wasserzuleitungsmittel (1) weiterhin zugeleitet werden.

12. Anlage nach einem der Ansprüche 1 bis 11, **dadurch gekennzeichnet, dass** sie Bereiche für den Übergang des Wassers (20, 21, 5) zwischen den Kanalbecken aufweist.

13. Anlage nach Anspruch 12, **dadurch gekennzeichnet, dass** die besagten Übergangsbereiche (20, 21, 5) im Wesentlichen dreiecksförmige Querschnitte aufweisen und jeweils zwischen zwei Kanalbecken angebracht sind.

14. Anlage nach einem der Ansprüche 1 bis 13, **dadurch gekennzeichnet, dass** es möglich ist, einen lamellenförmigen Schlammabsetzbereich bzw. mehrere lamellenförmige Schlammabsetzbereiche in den besagten Kanälen zu integrieren.
